# EUROPEAN PATENT APPLICATION

(11) **EP 4 742 423 A1**
(43) Date of publication of application: **13.05.2026**
(21) Application number: 23944703.0
(22) Date of filing: 12.07.2023
(51) Int. Cl.: H01M 50/533, H01M 50/147, H01M 50/152, H01M 50/528, H01M 50/572, H01M 50/591

(54) **END COVER ASSEMBLY, ENERGY STORAGE DEVICE, AND ENERGY STORAGE SYSTEM**

(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: LI, Maosong, Xiamen, Fujian 361100 (CN); TAN, Jiben, Xiamen, Fujian 361100 (CN)
(74) Representative: Santarelli
(86) International application number: PCT/CN2023/107086
(87) International publication number: WO 2025/010683

(57) **Abstract**

An end cover assembly (100), an energy-storage apparatus (200), and an energy-storage system (300) are provided in the disclosure. A first lower plastic member (31), a first terminal post (41), and a first connector (61) are included. The first terminal post (40) penetrates through the first lower plastic member (31) and abuts against a first surface (3111) thereof. The first terminal post (40) includes a first terminal-post welding portion (611) and includes a first inner, middle, and outer welding rings that are arranged in sequence and spaced apart thereon. Centerlines of the first inner, middle, and outer welding rings coincide with one another. The first terminal-post welding portion (611) is electrically connected to the first terminal post (41) via the first inner, middle, and outer welding rings. The first inner welding ring (613) has a first welding stress point (6131), the first middle welding ring (614) has a second welding stress point (6141), and the first outer welding ring (615) has a third welding stress point (6151). Any two stress points of the first, second, and third welding stress points are arranged in a staggered manner.

## Description

### TECHNICAL FIELD

The present disclosure relates to the field of energy-storage technology, and in particular, to an end cover assembly, an energy-storage apparatus, and an energy-storage system.

### BACKGROUND

With the development of clean energy, an increasing number of devices employ energy-storage apparatuses such as secondary batteries as their primary power source. In an energy storage apparatus, a connector needs to be disposed between terminal posts and an electrode assembly to achieve electrical connection therebetween. Currently, the performance of electrical connection between the terminal posts and the electrode assembly is relatively poor, which can easily lead to the failure of a secondary battery during use, thereby affecting the service life of the battery.

### SUMMARY

An end cover assembly, an energy-storage apparatus, and an energy-storage system are provided in embodiments of the disclosure, which can avoid failure of a secondary battery and impact on the service life of the secondary battery due to poor performance of electrical connection between a terminal post and an electrode assembly.

In a first aspect, an end cover assembly is provided in the disclosure. The end cover assembly includes a first lower plastic member having a first surface facing an electrode assembly, a first terminal post penetrating through the first lower plastic member, and a first connector. The first connector abuts against the first surface. The first connector is electrically connectable between the first terminal post and the electrode assembly. The first connector includes a first terminal-post welding portion, and includes a first inner welding ring, a first middle welding ring, and a first outer welding ring disposed on the first terminal-post welding portion. A centerline of the first inner welding ring, a centerline of the first middle welding ring, and a centerline of the first outer welding ring coincide with one another. The first middle welding ring is located outside the first inner welding ring and spaced apart from the first inner welding ring. The first outer welding ring is located outside the first middle welding ring and spaced apart from the first middle welding ring, and the first terminal-post welding portion is electrically connected to the first terminal post via the first inner welding ring, the first middle welding ring, and the first outer welding ring. The first inner welding ring has a first welding stress point, the first middle welding ring has a second welding stress point, and the first outer welding ring has a third welding stress point. In a radial direction of the first outer welding ring, any two stress points of the first welding stress point, the second welding stress point, and the third welding stress point are arranged in a staggered manner.

It may be understood that, the first welding stress point may indicate a welding start point (or end point) of the first inner welding ring, and the first welding stress point may be a pit formed by the melting of the first connector under heat. The second welding stress point may indicate a welding start point (or end point) of the first middle welding ring, and the second welding stress point may be a pit formed by the melting of the first connector under heat. The third welding stress point may indicate a welding start point (or end point) of the first outer welding ring, and the third welding stress point may be a pit formed by the melting of the first connector under heat. By staggering the welding start points (end points) of the three welding rings in the radial direction of the welding rings, concentration of the welding start points (end points) in the same radius direction is avoided, which prevents insufficient structural strength of the first connector caused by melting of the first connector. Furthermore, it effectively mitigates warping of the first connector due to stress concentration. As a result, the performance of electrical connection between the first terminal post and the electrode assembly is improved, contributing to enhanced service life and operational reliability of an energy-storage apparatus equipped with the end cover assembly.

In a possible embodiment, a distance between the first inner welding ring and the first middle welding ring is less than a distance between the first middle welding ring and the first outer welding ring.

It may be understood that, the first inner welding ring and the first middle welding ring primarily serve as the current path region between the first terminal post and the first connector. By setting a relatively small distance between the first inner welding ring and the first middle welding ring, a surface connection structure is easily formed, avoiding the formation of parasitic capacitance between the first inner welding ring and the first middle welding ring, thereby reducing potential current loss. The first outer welding ring primarily serves as a reinforcement ring for the connection between the first terminal post and the first connector. The first outer welding ring having a larger diameter can increase the welding area between the first connector and the first terminal post, further enhancing the structural strength of the end cover assembly. Through the coordinated arrangement of the first inner welding ring, the first middle welding ring, and the first outer welding ring, a large-area and stable connection structure may be formed between the first connector and the first terminal post.

In a possible embodiment, the first terminal post includes a first post body and a first flange portion. The first post body protrudes from the first flange portion. A first terminal-post through hole is defined on the first lower plastic member. The first terminal-post through hole includes a first hole and a second hole communicating with each other. An aperture size of the second hole is greater than an aperture size of the first hole. A portion of the first post body is located in the first hole. The first flange portion is located in the second hole. A surface of the first flange portion facing away from the first post body is flush with the first surface. The first flange portion is fixedly connected to the first connector by the first inner welding ring, the first middle welding ring, and the first outer welding ring.

This arrangement ensures that a lower surface of the first terminal post (i.e., a surface of the first flange portion facing away from the first post body) is flush with a lower surface of the first lower plastic member (i.e., the first surface), so that the first terminal post does not protrude relative to the lower surface of the first lower plastic member. Consequently, to weld the first connector to the first terminal post, the first connector can directly abut against the lower surface of the first lower plastic member. This raises a welding position of a first tab, which is to be welded to the first connector, to the upper limit, thereby providing a larger bending angle for the first tab (bending 90 degrees from the vertical direction of a jelly-roll to the horizontal direction for welding to the first connector). This can avoid breakage caused by an excessively small bending angle for the first tab, thereby improving the production yield of the energy-storage apparatus.

In a possible embodiment, an area enclosed by the first outer welding ring on the first terminal-post welding portion is larger than an area of an orthographic projection of the first post body on the first terminal-post welding portion.

In this way, the first outer welding ring can establish the connection between the first connector and the first terminal post, and enables the first connector to further press tightly against the first lower plastic member, ensuring a tight abutment between the first lower plastic member and the end cover, thereby increasing the connection reliability among various components in the end cover assembly. Additionally, it can avoid an issue where heat concentrates in the region around the post body of the first terminal post during welding of the first connector and the first terminal post. Such concentrated heat may soften a first upper plastic member, causing the first terminal post to sag towards the side of the jelly roll.

In a possible embodiment, an orthographic projection of the first post body on the first terminal-post welding portion covers both an orthographic projection of the first inner welding ring on the first terminal-post welding portion and an orthographic projection of the first middle welding ring on the first terminal-post welding portion.

It may be understood that, the first inner welding ring and the first middle welding ring primarily serve as the current path region between the first terminal post and the first connector. By having the orthographic projection of the first post body on the first terminal-post welding portion cover both the orthographic projection of the first inner welding ring on the first terminal-post welding portion and the orthographic projection of the first middle welding ring on the first terminal-post welding portion, the first connector can be welded to the first flange portion of the first terminal post solely by the first inner welding ring and the first middle welding ring, achieving electrical connection between the first connector and the first terminal post. In this way, a large-area and stable electrical connection between the first connector and the first post body may be formed, thereby enhancing the overcurrent capability between the first connector and the first post body.

In a possible embodiment, the first connector further includes a first array indentation disposed on a surface of the first terminal-post welding portion facing away from the first lower plastic member. The first inner welding ring, the first middle welding ring, and the first outer welding ring are all located within a region enclosed by the first array indentation on the first terminal-post welding portion.

On one hand, the first array indentation can serve a positioning function, enabling rapid alignment between the first terminal-post welding portion and the first terminal post during the welding of the first connector to the first terminal post, which is beneficial for improving the efficiency of welding the first connector to the first terminal post. On the other hand, the first array indentation can increase the surface roughness of the first terminal-post welding portion. This helps prevent damage to the welding laser head caused by specular reflection of the laser beam off the smooth surface of the first terminal-post welding portion during laser penetration welding between the first terminal post and the first connector. Instead, the laser beam undergoes diffuse reflection on the surface of the first terminal-post welding portion, allowing for rapid absorption of laser energy by the first terminal-post welding portion, thereby further enhancing the efficiency of welding the first connector to the first terminal post.

In a possible embodiment, a distance between an outer edge of the first outer welding ring and an outer edge of the first array indentation is greater than or equal to 2mm.

In this way, a sufficient welding between the first connector and the first terminal post may be ensured, further improving the performance of connection between the first connector and the first terminal post.

In a possible embodiment, a region enclosed by the first array indentation on the first terminal-post welding portion is larger than an orthographic projection of the first flange portion on the first terminal-post welding portion.

It may be understood that, the first array indentation can serve a positioning function, enabling rapid alignment between the first terminal-post welding portion of the first connector and the first flange portion of the first terminal post during the welding of the first connector to the first terminal post, which is beneficial for improving the efficiency of welding the first connector to the first terminal post and ensuring reliable welding between the first connector and the first flange portion of the first terminal post.

In a possible embodiment, the first connector further includes two first tab-welding-portions. The two first tab-welding-portions are connected to a same side of the first terminal-post welding portion, and are spaced apart from each other in a width direction of the end cover assembly. The first terminal-post welding portion and the two first tab-welding-portions cooperatively define an opening. The first lower plastic member includes a first lower plastic body and a flow-splitting portion. The flow-splitting portion protrudes from the first surface of the first lower plastic body, and a portion of the flow-splitting portion is located in the opening.

It may be understood that, by positioning a portion of the flow-splitting portion located in the opening cooperatively defined by the two first tab-welding-portions and the first terminal-post welding portion, it can prevent the first connector from occupying the space required by the flow-splitting portion, thereby ensuring that the function of the flow-splitting portion in directing liquid remains unimpeded.

In a possible embodiment, the first lower plastic member further includes a first barrier wall. The first barrier wall is annularly disposed on a periphery of the first lower plastic body in a circumferential direction of the first lower plastic body. The first barrier wall protrudes from the first surface of the first lower plastic body. The first barrier wall and the first lower plastic body cooperatively define a first cavity, and the first cavity is configured to accommodate a portion of the first connector.

In this way, the first barrier wall can reinforce the structural strength of the first lower plastic member in the length direction and the width direction of the end cover assembly.

In a possible embodiment, a length direction of the end cover assembly, a width *W*1 of the first terminal-post welding portion satisfies: 24mm ≤ *W*1 ≤ 38mm.

It may be understood that, the first connector is a metal component with greater mechanical strength. By setting the width *W*1 of the first terminal-post welding portion within the aforementioned range, the strength of connection between the first connector and the first terminal post may be ensured, enabling the first connector to be tightly welded to the first terminal post. In this way, the first lower plastic member tightly abuts against the lower surface of the end cover, thereby enhancing the overall structural strength of the end cover assembly.

In a possible embodiment, in the width direction of the end cover assembly, a width *W2* of each of the two first tab-welding-portions satisfies: 14mm ≤ *W2* ≤ 27mm.

It may be understood that, by providing the two first tab-welding-portions on the first connector and positioning the two first tab-welding-portions away from the first terminal post, portions of the first lower plastic member corresponding to the two first tab-welding-portions may tightly abut against the end cover during welding the two first tab-welding-portions to the two first tabs. In this way, the performance of connection between the end cover and the portions of the first lower plastic member away from the first terminal post may be enhanced, to prevent the central portion of the first lower plastic member from being unsupported, thereby avoiding sagging of the first lower plastic member caused by plastic degradation and strength reduction after prolonged use. It also prevents the opening below an explosion-proof valve from enlarging due to the sagging of the first lower plastic member, which could otherwise allow foreign matter to easily enter and adhere to the explosion-proof valve, adversely affecting the valve-opening performance of the explosion-proof valve.

In a possible embodiment, in a length direction of the end cover assembly, a distance W3 between the first terminal-post welding portion and the flow-splitting portion satisfies: 0.5mm ≤ *W*3 ≤ 2.5mm.

It may be understood that, an appropriate distance between the first terminal-post welding portion and the flow-splitting portion can be maintained by setting the distance between the first terminal-post welding portion and the flow-splitting portion within the aforementioned range, thereby ensuring that the flow-splitting portion possesses a sufficient structural strength. Consequently, when electrolyte is injected into the flow-splitting portion at high speed through a liquid injection hole, the flow-splitting portion is less likely to bend downward or tilt under the impact of intense liquid flow, preventing a large amount of electrolyte spraying out from the side of the explosion-proof valve, and thus avoiding adversely affecting the uniformity of electrolyte distribution.

In a second aspect, an energy-storage apparatus is further provided in the disclosure. The energy-storage apparatus includes an electrode assembly and the end cover assembly mentioned above, and the electrode assembly is electrically connected to the end cover assembly.

In a third aspect, an energy-storage system is further provided in the disclosure, and the energy-storage system includes the energy-storage apparatus mentioned above.

### BRIEF DESCRIPTION OF THE DRAWINGS

In order to describe technical solutions in the related art or embodiments of the disclosure more clearly, the following will give a brief introduction to the accompanying drawings required for describing the related art or embodiments. Apparently, the accompanying drawings hereinafter described are merely some embodiments of the disclosure. Based on these drawings, those of ordinary skill in the art can also obtain other drawings without creative effort.
FIG. 1 is a schematic structural view of an energy-storage system provided in embodiments of the disclosure.
FIG. 2 is a schematic structural view of an energy-storage apparatus provided in embodiments of the disclosure.
FIG. 3 is an exploded schematic view of the energy-storage apparatus illustrated in FIG. 2.
FIG. 4 is a schematic structural view illustrating an unfolded state of an electrode assembly of the energy-storage apparatus illustrated in FIG. 2.
FIG. 5 is a partial schematic structural view of the energy-storage apparatus illustrated in FIG. 2.
FIG. 6 is a schematic structural view of an end cover assembly of the energy-storage apparatus illustrated in FIG. 2.
FIG. 7 is an exploded schematic view of the end cover assembly illustrated in FIG. 6.
FIG. 8 is a structural view of a lower plastic assembly of the end cover assembly illustrated in FIG. 7, viewed from one direction.
FIG. 9 is a schematic cross-sectional view of FIG. 6, taken along line A-A.
FIG. 10 is a schematic structural view illustrating assembly of the lower plastic assembly and a connector assembly illustrated in FIG. 7, viewed from one direction.
FIG. 11 is a schematic structural view of a first connector of the connector assembly illustrated in FIG. 7, viewed from one direction.
FIG. 12 is a schematic structural view of the first connector of the connector assembly illustrated in FIG. 7, viewed from another direction.
FIG. 13 is a schematic structural view illustrating assembly of the first connector and a first lower plastic member illustrated in FIG. 7, viewed from one direction.
FIG. 14 is a schematic structural view illustrating welding stress points on the first connector or a second connector of the end cover assembly illustrated in FIG. 6.
FIG. 15 is a schematic structural view of the second connector of the connector assembly illustrated in FIG. 7, viewed from one direction.
FIG. 16 is a schematic structural view of the second connector of the connector assembly illustrated in FIG. 7, viewed from another direction.
FIG. 17 is a schematic structural view illustrating assembly of the second connector and a second lower plastic member illustrated in FIG. 7, viewed from one direction.

### Reference signs:

energy-storage system 300, photovoltaic panel 310, wind turbine 320, power grid 330, energy-storage apparatus 200, housing 210, end cover assembly 100, electrode assembly 220, protective film 230, core connection portion C, electrode core 2210, jelly roll 2220, first tab 2230, second tab 2240, explosion-proof valve assembly 10, end cover 20, lower plastic assembly 30, terminal-post assembly 40, upper plastic assembly 50, connector assembly 60, insulating film assembly 70, liquid-injection-hole sealing member 80, explosion-proof valve 11, protective sheet 12, third terminal-post through hole 21, fourth terminal-post through hole 22, liquid-injection hole 23, explosion-proof-valve through hole 24, first lower plastic member 31, second lower plastic member 32, first lower plastic body 311, first protrusion 312, flow-splitting portion 313, first barrier wall 314, first surface 3111, second surface 3112, first terminal-post through hole 315, first hole 3151, second hole 3152, liquid drainage hole 3131, first cavity 316, second lower plastic body 321, second protrusion 322, second barrier wall 323, explosion-proof-valve grid 324, third surface 3211, fourth surface 3212, second terminal-post through hole 325, third hole 3251, fourth hole 3252, second cavity 326, first terminal post 41, second terminal post 42, first sealing member 43, second sealing member 44, first post body 411, first flange portion 412, second post body 421, second flange portion 422, first upper plastic member 51, second upper plastic member 52, first connector 61, second connector 62, first terminal-post welding portion 611, first tab-welding-portion 612, first inner welding ring 613, first middle welding ring 614, first outer welding ring 615, first array indentation 616, opening 617, width *W*1 of the first terminal-post welding portion 611, width *W*2 of the first tab-welding-portion 612, distance *W*3 between the first terminal-post welding portion 611 and the flow-splitting portion 313, distance D1 between the first inner welding ring 613 and the first middle welding ring 614, distance D2 between the first middle welding ring 614 and the first outer welding ring 615, first welding stress point 6131, second welding stress point 6141, third welding stress point 6151, second terminal-post welding portion 621, second tab-welding-portion 622, second inner welding ring 623, second middle welding ring 624, second outer welding ring 625, second array indentation 626, width *W*4 of the second terminal-post welding portion 621, width *W*5 of the second tab-welding-portion 622, distance *D*3 between the second inner welding ring 623 and the second middle welding ring 624, distance *D*4 between the second middle welding ring 624 and the second outer welding ring 625, fourth welding stress point 6231, fifth welding stress point 6241, sixth welding stress point 6251, first insulating film 71, second insulating film 72, third insulating film 73, fourth insulating film 74, fifth insulating film 75, and sixth insulating film 76.

### DETAILED DESCRIPTION

For ease of understanding, terms involved in embodiments of the disclosure will be explained first.

The term "and/or" in the disclosure is merely an association relationship describing associated objects, which means that there may be three types of relationships. For example, "A and/or B" may refer to three cases: only A exists, both A and B exist, and only B exists.

The term "multiple" in the disclosure refers to two or more than two.

The term "connect" may be understood in a broad sense. For example, a connection between A and B may be a direct connection between A and B, or an indirect connection between A and B through an intermedium.

The embodiments of the disclosure are clearly described below with reference to the accompanying drawings.

Due to that people's demand for energy is strongly correlated with time and space, in order to rationally utilize energy and improve the utilization rate of energy, it may need to store a type of energy via a medium or a device, or it may need to convert a type of energy into another type of energy and then store the other type of energy via a medium or a device. Stored energy may be released in a specific energy form based on future application needs. It is known that green energy sources such as photovoltaics and wind power are mainly used to generate green electricity to replace fossil fuels. At present, the generation of green electricity generally depends on photovoltaics, wind power, water potential, etc. Wind energy and solar energy generally have features such as high intermittence and significant fluctuations, and thus the power grid may not be stable, resulting in insufficient electricity during peak periods and excess electricity during off-peak periods. Unstable voltage may also cause damage to electricity. Therefore, issues like "curtailment of wind power and solar power" may arise due to insufficient electricity demand or insufficient grid integration capacity. To solve these problems, energy storage may be needed which involves converting electric energy into other type of energy by physical or chemical means and then storing the other type of energy. Stored energy may be converted into electric energy and released when needed. Simply, "energy storage" is similar to a large-scale "power bank", which refers to that electric energy is stored in the case of sufficient solar energy and wind energy, and the stored electric energy is released when needed.

Taking electrochemical energy storage as an example, an energy-storage apparatus is provided in the disclosure. The energy-storage apparatus includes a set of chemical cells. Chemical elements in the chemical cells mainly serve as an energy-storage medium, and the charging and discharging process is accompanied by chemical reaction or change of the energy storage medium, simply, the charging and discharging process involves storing in the chemical cells the electric energy generated by wind energy and solar energy, and releasing the stored electric energy for use during peak periods of electricity usage or transferring the stored electric energy to areas where electricity is in short supply.

At present, energy storage (i.e., storing energy) may be applied in various application scenarios, including generation-side energy storage (wind energy and solar energy), grid-side energy storage, renewable-energy grid-connected energy storage, user-side energy storage, etc. Corresponding types of energy-storage apparatuses include the following.
(1) A large-scale energy-storage container applied in energy storage scenarios at the grid side is included, where the energy storage container may serve as a high-quality active and reactive regulation power source in the grid, which can realize matching of electric energy with loads in time and space, enhance the capacity for integration of renewable energy, and is of great significance in the backup of the grid system, relieving the pressure of peak power supply, and peak shaving and frequency modulation.
(2) A small and medium-sized energy-storage cabinet applied in industrial and commercial energy storage scenarios at the user side (banks, shopping malls, etc.) and a small-sized household energy storage box applied in household energy storage scenarios at the user side are included, which mainly operate in a "peak shaving and valley filling" mode. Based on the demand for electricity, there may be a significant price difference in electricity prices at peak and off-peak periods. To reduce costs, an energy storage device of a user such as an energy storage cabinet/box may be charged during off-peak periods, and the electricity in the energy storage device may be released for use during the peak periods to save electricity costs.

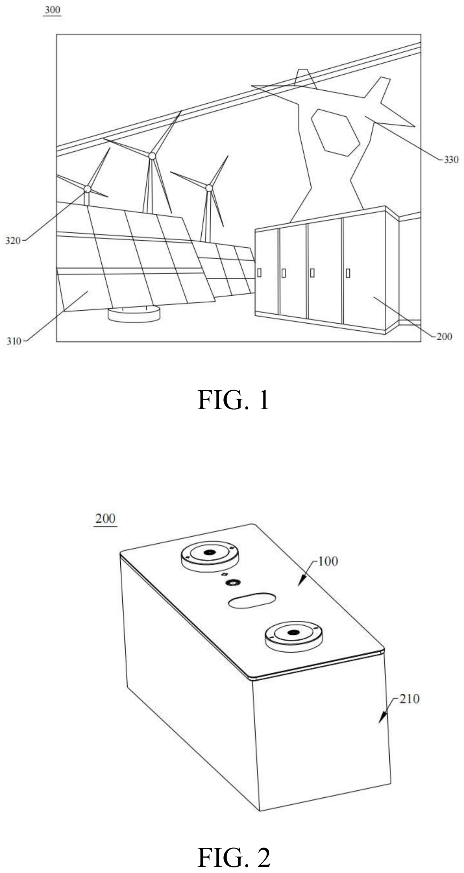

Reference is made to FIG. 1, which is a schematic structural view of an energy-storage system 300 provided in embodiments of the disclosure.

An energy-storage system 300 is provided in the embodiments of the disclosure. The energy-storage system 300 includes an electric energy conversion device (photovoltaic panel 310), a wind energy conversion device (wind turbine 320), a power grid 330, and an energy-storage apparatus 200. The energy-storage apparatus 200 may serve as an energy-storage cabinet and may be installed outdoors. Specifically, the photovoltaic panel 310 may convert solar energy into electrical energy during off-peak electricity hours. The energy-storage apparatus 200 is used to store this electrical energy and supply it to the power grid 330 during peak electricity hours or provide power when the power grid 330 is interrupted or out of service. The wind energy conversion device (wind turbine 320) may convert wind energy into electrical energy, and the energy-storage apparatus 200 is used to store this electrical energy and supply it to the power grid 330 during peak electricity hours or provide power when the power grid 330 is interrupted or out of service. The transmission of electrical energy may be carried out using high-voltage cables.

The energy-storage apparatus 200 may be implemented as multiple energy-storage apparatuses 200, and the multiple energy-storage apparatuses 200 may be connected in series or parallel. The multiple energy-storage apparatuses 200 may be supported and electrically connected using isolation plates (not illustrated). In this embodiment, "multiple" refers to two or more than two. An energy-storage box may also be provided externally to accommodate the multiple energy-storage apparatuses 200.

It may be understood that, the energy-storage apparatus 200 may include, but is not limited to, individual cells, battery modules, battery packs, battery systems, and so on. The actual application forms of the energy-storage apparatus 200 provided in the embodiments of the disclosure may be, but are not limited to, the products listed above, and may also include other application forms. The embodiments of the disclosure do not impose strict limitations on the application forms of the energy-storage apparatus 200. In the embodiments of the disclosure, the energy-storage apparatus 200 is exemplified by a multi-cell battery.

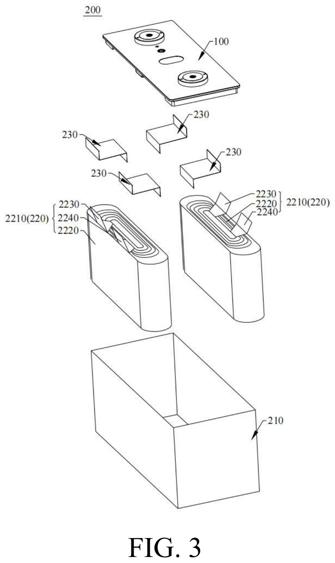

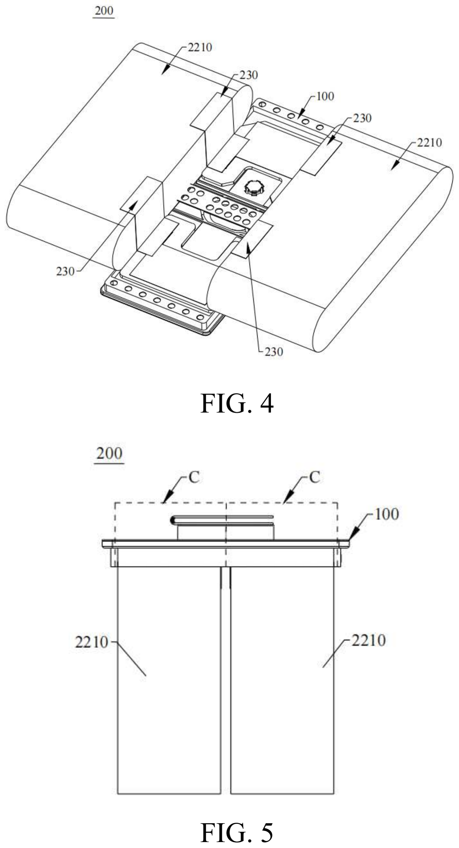

Reference is made to FIG. 2, FIG. 3, and FIG. 4. FIG. 2 is a schematic structural view of the energy-storage apparatus 200 provided in embodiments of the disclosure. FIG. 3 is an exploded schematic view of the energy-storage apparatus 200 illustrated in FIG. 2. FIG. 4 is a schematic structural view illustrating an unfolded state of an electrode assembly 220 of the energy-storage apparatus 200 illustrated in FIG. 2.

The energy-storage apparatus 200 may include a housing 210, an end cover assembly 100, an electrode assembly 220, and a protective film 230. An opening is defined at an end of the housing 210. The electrode assembly 220 is mounted in the housing 210. The end cover assembly 100 is connected to the opening of the housing 210. The end cover assembly 100 and the housing 210 cooperatively encapsulate the electrode assembly 220. The end cover assembly 100 is electrically connected to the electrode assembly 220 to achieve lead-out of battery electrodes. The protective film 230 can secure the connection between the electrode assembly 220 and the end cover assembly 100, ensuring the stability and reliability of the performance of electrical connection between the electrode assembly 220 and the end cover assembly 100. For example, the housing 210 may be a metal housing, such as an aluminum housing. Certainly, the housing 210 may be made of other materials. The protective film 230 may be an insulating tape, such as a blue film.

It may be noted that, FIG. 2 to FIG. 4 schematically describe the connection relationship among the housing 210, the end cover assembly 100, the electrode assembly 220, and the protective film 230, which is not to specifically limit the connection position, specific configuration, and quantity of each device. The schematic structure of embodiments of the disclosure does not constitute a specific limitation to the energy-storage apparatus 200. In other embodiments of the disclosure, the energy-storage apparatus 200 may include more or fewer components than those illustrated in FIG. 2 to FIG. 4, or certain components may be combined, or certain components may be split, or components may be arranged differently. The components illustrated in FIG. 2 to FIG. 4 may be implemented in hardware, software, or a combination of software and hardware.

Reference is made to FIG. 3, FIG. 4, and FIG. 5. FIG. 5 is a partial schematic structural view of the energy-storage apparatus 200 illustrated in FIG. 2.

The end cover assembly 100 includes at least two electrode-core connection portions C arranged sequentially in a thickness direction of the end cover assembly 100. The electrode assembly 220 may include at least two electrode cores 2210. The at least two electrode cores 2210 are sequentially arranged in a thickness direction of the electrode assembly 220. The number of the electrode cores 2210 may be equal to the number of the electrode-core connection portions C, and each electrode core 2210 is connected to a corresponding electrode-core connection portion C of the end cover assembly 100. By providing multiple electrode cores 2210 in the energy-storage apparatus 200, the battery capacity of the energy-storage apparatus 200 may be increased, allowing the battery to be used for a relatively long time and thereby expanding the applicable scenarios of the battery.

For example, the end cover assembly 100 may include two electrode-core connection portions C, which may be symmetrically arranged. The electrode assembly 220 may include two electrode cores 2210. One electrode core 2210 is connected to one electrode-core connection portion C, and the other electrode core 2210 is connected to the other electrode-core connection portion C, thereby establishing an electrical connection between the end cover assembly 100 and the electrode assembly 220.

Each electrode core 2210 may include a jelly roll 2220, a first tab 2230, and a second tab 2240. The first tab 2230 and the second tab 2240 are connected to the jelly roll 2220. The polarity of the first tab 2230 is opposite to the polarity of the second tab 2240, with one being a positive tab and the other being a negative tab.

The jelly roll 2220 may include a positive electrode sheet (not illustrated), a negative electrode sheet (not illustrated), and a separator (not illustrated). The separator is sandwiched between the positive electrode sheet and the negative electrode sheet. The positive electrode sheet is electrically connected to the first tab 2230, and the negative electrode sheet is electrically connected to the second tab 2240. The positive electrode sheet, the separator, and the negative electrode sheet are sequentially stacked to form a layered structure, which is wound to form the jelly roll 2220. A portion of the positive electrode sheet extending from the jelly roll 2220 may form the first tab 2230, and a portion of the negative electrode sheet extending from the jelly roll 2220 may form the second tab 2240. The separator may be a base membrane made of an insulating material, which is lightweight and has good tensile properties, and can be well connected to the positive electrode sheet and the negative electrode sheet. For example, the material of the separator may be a polymer insulating layer, such as polystyrene, polypropylene, polyester, polycarbonate, polytetrafluoroethylene, polyimide films, etc. Alternatively, the material of the separator may be synthetic fiber insulating paper, such as aramid fiber paper, polyester fiber paper. Alternatively, the material of the separator may be various insulating adhesive tapes.

In a specific application scenario, as illustrated in FIG. 3 and FIG. 4, there are two electrode cores 2210 and four protective films 230. In the case where the two electrode cores 2210 are mounted in the housing 210, in the thickness direction of the energy-storage apparatus 200, the first tab 2230 of one electrode core 2210 and the first tab 2230 of the other electrode core 2210 are opposite to each other, and the second tab 2240 of one electrode core 2210 and the second tab 2240 of the other electrode core 2210 are opposite to each other. This arrangement enables electrodes of the same polarity from the two electrode cores 2210 to be led out together. The number of protective films 230 is equal to the number of the tabs. Each protective film 230 may be attached to a connection portion between a tab (the first tab 2230 or the second tab 2240) and the end cover assembly 100, thereby serving to fix and provide insulating protection for the tab.

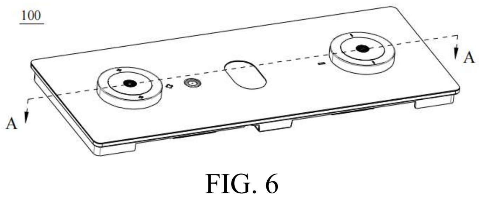

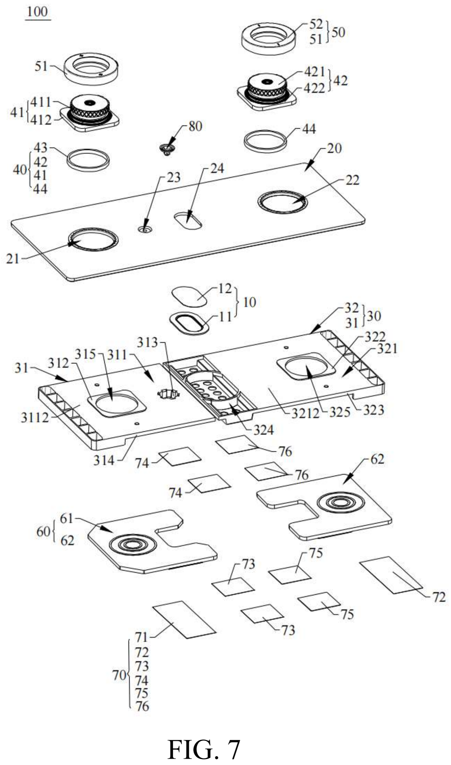

Reference is made to FIG. 6 and FIG. 7. FIG. 6 is a schematic structural view of the end cover assembly 100 of the energy-storage apparatus 200 illustrated in FIG. 2. FIG. 7 is an exploded schematic view of the end cover assembly 100 illustrated in FIG. 6.

The end cover assembly 100 may include an explosion-proof valve assembly 10, an end cover 20, a lower plastic assembly 30, a terminal-post assembly 40, an upper plastic assembly 50, a connector assembly 60, an insulating film assembly 70, and a liquid-injection-hole sealing member 80. The connector assembly 60 is connected to the electrode assembly 220. The lower plastic assembly 30 is located on a side of the connector assembly 60 facing away from the electrode assembly 220. The end cover 20 is located on a side of the lower plastic assembly 30 facing away from the connector assembly 60, and the end cover 20 and the lower plastic assembly 30 are stacked. The terminal-post assembly 40 penetrates through the end cover 20 and the lower plastic assembly 30. One end of the terminal-post assembly 40 extends out of the lower plastic assembly 30 and is connected to the connector assembly 60, and the other end of the terminal-post assembly 40 extends out of the end cover 20 to serve as an electrode of the energy-storage apparatus 200. The upper plastic assembly 50 is sleeved on the terminal-post assembly 40. The explosion-proof valve assembly 10 is mounted on the end cover 20 and is used for pressure relief protection of the energy-storage apparatus 200. The insulating film assembly 70 is connected between the connector assembly 60 and the electrode assembly 220, and between the connector assembly 60 and the lower plastic assembly 30, so as to protect various welding points on the connector assembly 60. The liquid-injection-hole sealing member 80 is connected to the end cover 20 and is used to seal a liquid-injection hole 23 on the end cover 20.

The explosion-proof valve assembly 10 may include an explosion-proof valve 11 and a protective sheet 12. The protective sheet 12 and the explosion-proof valve 11 are stacked, with the protective sheet 12 covering the explosion-proof valve 11.

A third terminal-post through hole 21, a fourth terminal-post through hole 22, the liquid-injection hole 23, and an explosion-proof-valve through hole 24 are defined on the end cover 20. The third terminal-post through hole 21 and the fourth terminal-post through hole 22 are respectively located at opposite ends of the end cover 20 in a length direction of the end cover 20. The third terminal-post through hole 21 allows a first terminal post 41 to pass through, and the fourth terminal-post through hole 22 allows a second terminal post 42 to pass through. The liquid-injection hole 23 is located between the third terminal-post through hole 21 and the fourth terminal-post through hole 22, and is used to provide a fluid channel for injecting external electrolyte into the interior of the energy-storage apparatus 200. The explosion-proof-valve through hole 24 is located between the liquid-injection hole 23 and the fourth terminal-post through hole 22, and is used for mounting the explosion-proof-valve assembly 10. In the length direction of the end cover 20, the third terminal-post through hole 21, the liquid-injection hole 23, the explosion-proof-valve through hole 24, and a second terminal-post through hole 325 are arranged in sequence.

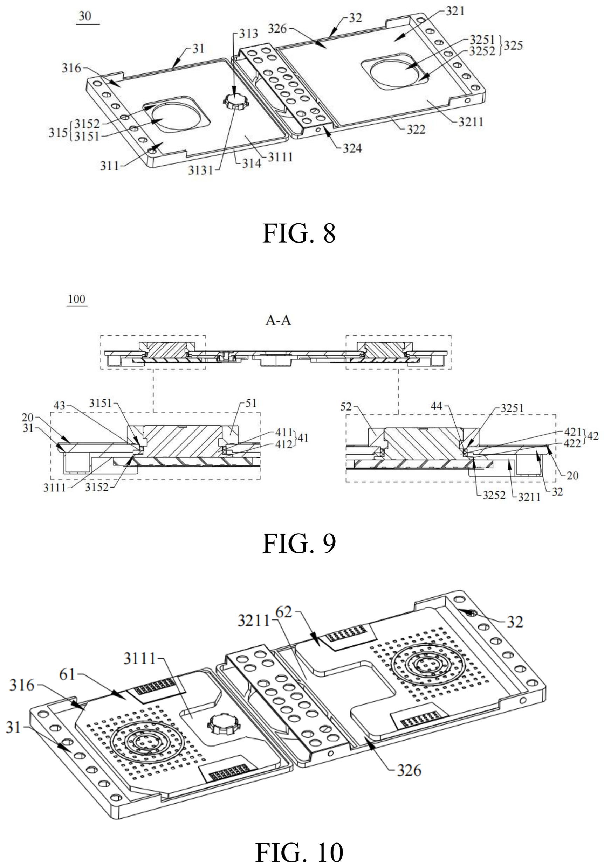

Reference is made to FIG. 7 and FIG. 8. FIG. 8 is a structural view of the lower plastic assembly 30 of the end cover assembly 100 illustrated in FIG. 7, viewed from one direction. The lower plastic assembly 30 and the end cover 20 are stacked, and the lower plastic assembly 30 includes a first lower plastic member 31 and a second lower plastic member 32. The first lower plastic member 31 and the second lower plastic member 32 are arranged in the length direction of the energy-storage apparatus 200. In the length direction of the end cover assembly 100, a length of the first lower plastic member 31 is less than a length of the second lower plastic member 32.

The first lower plastic member 31 includes a first lower plastic body 311, a first protrusion 312, a flow-splitting portion 313, and a first barrier wall 314.

The first lower plastic body 311 has a first surface 3111 and a second surface 3112 opposite to each other. The first surface 3111 is the surface of the first lower plastic body 311 facing the connector assembly 60, and the second surface 3112 is the surface of the first lower plastic body 311 facing the end cover 20.

The first protrusion 312 is disposed on the second surface 3112 of the first lower plastic body 311, and protrudes from the second surface 3112 of the first lower plastic body 311.

A first terminal-post through hole 315 is defined on the first lower plastic member 31. The first terminal-post through hole 315 is located in the first lower plastic body 311 and the first protrusion 312, and penetrates through the first lower plastic body 311 and the first protrusion 312 in the thickness direction of the end cover assembly 100. The first terminal-post through hole 315 is configured to allow the first terminal post 41 to pass through. The first terminal-post through hole 315 is arranged opposite to the third terminal-post through hole 21 of the end cover 20 in the thickness direction of the end cover assembly 100. The first terminal-post through hole 315 includes a first hole 3151 and a second hole 3152 communicating with each other. An aperture size of the second hole 3152 is greater than an aperture size of the first hole 3151. For example, the first hole 3151 may be a round hole, and the second hole 3152 may be a square hole.

The flow-splitting portion 313 is recessed relative to the second surface 3112 of the first lower plastic body 311, and protrudes from the first surface 3111 of the first lower plastic body 311. The flow-splitting portion 313 is arranged opposite to the liquid-injection hole 23 of the end cover 20 in the thickness direction of the end cover assembly 100, and communicates with the liquid-injection hole 23. Multiple liquid drainage holes 3131 may be defined on the flow-splitting portion 313. The multiple liquid drainage holes 3131 are spaced apart in a circumferential direction of the flow-splitting portion 313, and each liquid drainage hole 3131 is a through hole. With this configuration, after electrolyte is injected from the liquid injection hole 23 of the end cover 20, the electrolyte can flow into the flow-splitting portion 313 and then flow out to the electrode assembly 220 through the multiple liquid drainage holes 3131. The arrangement of multiple liquid drainage holes 3131 allows the electrolyte to flow more uniformly.

The first barrier wall 314 is disposed on the first surface 3111 of the first lower plastic body 311. The first barrier wall 314 protrudes from the first surface 3111, and is annularly disposed on a periphery of the first lower plastic body 311 in a circumferential direction of the first lower plastic body 311. The first barrier wall 314 can reinforce the structural strength of the first lower plastic member 31 in the length direction and the width direction of the end cover assembly 100. The first barrier wall 314 and the first lower plastic body 311 cooperatively define a first cavity 316, and the first cavity 316 can accommodate a portion of the first connector 61.

The second lower plastic member 32 includes a second lower plastic body 321, a second protrusion 322, a second barrier wall 323, and an explosion-proof-valve grid 324.

The second lower plastic body 321 has a third surface 3211 and a fourth surface 3212 opposite to each other. The third surface 3211 is the surface of the second lower plastic body 321 facing the connector assembly 60, and the fourth surface 3212 is the surface of the second lower plastic body 321 facing the end cover 20.

The second protrusion 322 is disposed on the fourth surface 3212 of the second lower plastic body 321, and protrudes from the fourth surface 3212 of the second lower plastic body 321.

A second terminal-post through hole 325 is defined on the second lower plastic member 32. The second terminal-post through hole 325 is located in the second lower plastic body 321 and the second protrusion 322, and penetrates through the second lower plastic body 321 and the second protrusion 322 in the thickness direction of the end cover assembly 100. The second terminal-post through hole 325 is configured to allow the second terminal post 42 to pass through. The second terminal-post through hole 325 is arranged opposite to the fourth terminal-post through hole 22 of the end cover 20 in the thickness direction of the end cover assembly 100. The second terminal-post through hole 325 includes a third hole 3251 and a fourth hole 3252 communicating with each other. An aperture size of the fourth hole 3252 is greater than an aperture size of the third hole 3251. For example, the third hole 3251 may be a circular hole, and the fourth hole 3252 may be a square hole.

The explosion-proof-valve grid 324 is recessed relative to the fourth surface 3212 of the second lower plastic body 321, and protrudes from the third surface 3211 of the second lower plastic body 321.

The second barrier wall 323 is disposed on the third surface 3211 of the second lower plastic body 321. The second barrier wall 323 protrudes from the third surface 3211 of the second lower plastic body 321, and is annularly disposed on a periphery of the second lower plastic body 321 in a circumferential direction of the second lower plastic body 321. The second barrier wall 323 can reinforce the structural strength of the second lower plastic member 32 in the length direction and the width direction of the end cover assembly 100. The second barrier wall 323 and the second lower plastic body 321 cooperatively define a second cavity 326, and the second cavity 326 can accommodate a portion of the second connector 62.

Reference is made to FIG. 7 and FIG. 9. FIG. 9 is a schematic cross-sectional view of FIG. 6, taken along line A-A.

The terminal-post assembly 40 may include a first terminal post 41, a second terminal post 42, a first sealing member 43, and a second sealing member 44. As for the first terminal post 41 and the second terminal post 42, one is a positive terminal post and the other is a negative terminal post.

The first terminal post 41 penetrates through the end cover 20 and the first lower plastic member 31. The first terminal post 41 may include a first post body 411 and a first flange portion 412. The first post body 411 protrudes from the first flange portion 412. A cross-sectional width of the first post body 411 in the height direction of the end cover assembly 100 is less than a cross-sectional width of the first flange portion 412 in the height direction of the end cover assembly 100. An outer diameter of the first post body 411 is less than an outer diameter of the first flange portion 412. A portion of the first post body 411 is located in the first hole 3151, and another portion of the first post body 411 extends out of the end cover 20 and protrudes relative to the end cover 20. The first flange portion 412 is located in the second hole 3152. A surface of the first flange portion 412 facing away from the first post body 411 is flush with the first surface 3111 of the first lower plastic member 31. This arrangement ensures that a lower surface of the first terminal post 41 (i.e., a surface of the first flange portion 412 facing away from the first post body 411) is flush with a lower surface of the first lower plastic member 31 (i.e., the first surface 3111), so that the first terminal post 41 does not protrude relative to the lower surface of the first lower plastic member 31. Consequently, to weld the first connector 61 to the first terminal post 41, the first connector 61 can directly abut against the lower surface of the first lower plastic member 31. This raises a welding position of a first tab 2230, which is to be welded to the first connector 61, to the upper limit, thereby providing a larger bending angle for the first tab 2230 (bending 90 degrees from the vertical direction of a jelly-roll 2220 to the horizontal direction for welding to the first connector 61). This can avoid breakage caused by an excessively small bending angle for the first tab 2230, thereby improving the production yield of the energy-storage apparatus 200.

The first sealing member 43 is ring-shaped. The first sealing member 43 is sleeved around the periphery of the first post body 411 and contacts the first flange portion 412. The first sealing member 43 elastically abuts between the first post body 411 and the first hole 3151 of the first terminal-post through hole 315.

The second terminal post 42 penetrates through the end cover 20 and the second lower plastic member 32. The second terminal post 42 may include a second post body 421 and a second flange portion 422. The second post body 421 protrudes from the second flange portion 422. A cross-sectional width of the second post body 421 in the height direction of the end cover assembly 100 is less than a cross-sectional width of the second flange portion 422 in the height direction of the end cover assembly 100. An outer diameter of the second post body 421 is less than an outer diameter of the second flange portion 422. A portion of the second post body 421 is located in the third hole 3251, and another portion of the second post body 421 extends out of the end cover 20 and protrudes relative to the end cover 20. The second flange portion 422 is located in the fourth hole 3252. A surface of the second flange portion 422 facing away from the second post body 421 is flush with the third surface 3211 of the second lower plastic member 32. This arrangement ensures that a lower surface of the second terminal post 42 (i.e., a surface of the second flange portion 422 facing away from the second post body 421) is flush with a lower surface of the second lower plastic member 32 (i.e., the third surface 3211), so that the second terminal post 42 does not protrude relative to the lower surface of the second lower plastic member 32. Consequently, to weld the second connector 62 to the second terminal post 42, the second connector 62 can directly abut against the lower surface of the second lower plastic member 32. This raises a welding position of a second tab 2240, which is to be welded to the second connector 62, to the upper limit, thereby providing a larger bending angle for the second tab 2240 (bending 90 degrees from the vertical direction of the jelly-roll 2220 to the horizontal direction for welding to the second connector 62). This can avoid breakage caused by an excessively small bending angle for the second tab 2240, thereby improving the production yield of the energy-storage apparatus 200.

The second sealing member 44 is a ring-shaped. The second sealing member 44 is sleeved around the periphery of the second post body 421 and contacts the second flange portion 422. The second sealing member 44 elastically abuts between the second post body 421 and the third hole 3251 of the second terminal-post through hole 325.

Reference is again made to FIG. 7 and FIG. 9. The upper plastic assembly 50 may include a first upper plastic member 51 and a second upper plastic member 52.

The first upper plastic member 51 is a ring-shaped. The first upper plastic member 51 is sleeved around the periphery of the first post body 411 and contacts the first sealing member 43. A portion of the first upper plastic member 51 is located between the first post body 411 and the first hole 3151 of the first terminal-post through hole 315. Another portion of the first upper plastic member 51 is located outside the end cover 20 and protrudes relative to the end cover 20.

The second upper plastic member 52 is a ring-shaped. The second upper plastic member 52 is sleeved around the periphery of the second post body 421 and contacts the second sealing member 44. A portion of the second upper plastic member 52 is located between the second post body 421 and the third hole 3251 of the second terminal-post through hole 325. Another portion of the second upper plastic member 52 is located outside the end cover 20 and protrudes relative to the end cover 20.

Reference is made to FIG. 7 and FIG. 10. FIG. 10 is a schematic structural view illustrating assembly of the lower plastic assembly 30 and the connector assembly 60 illustrated in FIG. 7, viewed from one direction.

The connector assembly 60 may include a first connector 61 and a second connector 62. The first connector 61 is connected between the first tab 2230 and the first terminal post 41. A portion of the first connector 61 is located in the first cavity 316 of the first lower plastic member 31. The electrical connection between the first tab 2230 and the first terminal post 41 is achieved by the first connector 61. The second connector 62 is connected between the second tab 2240 and the second terminal post 42. A portion of the second connector 62 is located in the second cavity 326 of the second lower plastic member 32. The electrical connection between the second tab 2240 and the second terminal post 42 is achieved by the second connector 62.

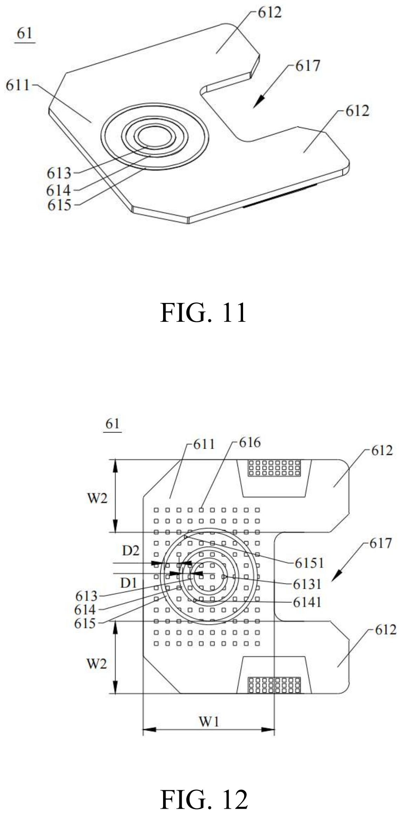

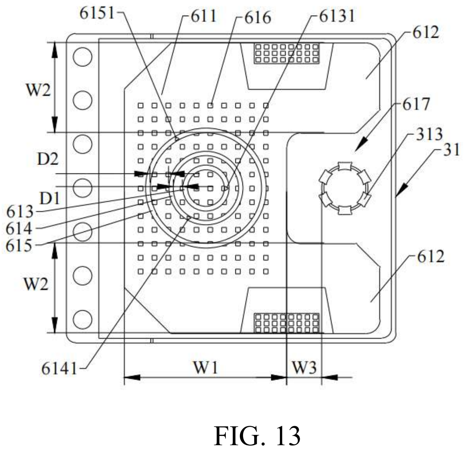

Reference is made to FIG. 7, FIG. 11, FIG. 12, and FIG. 13. FIG. 11 is a schematic structural view of the first connector 61 of the connector assembly 60 illustrated in FIG. 7, viewed from one direction. FIG. 12 is a schematic structural view of the first connector 61 of the connector assembly 60 illustrated in FIG. 7, viewed from another direction. FIG. 13 is a schematic structural view illustrating assembly of the first connector 61 and the first lower plastic member 31 illustrated in FIG. 7, viewed from one direction.

The first connector 61 abuts against the first surface 3111 of the first lower plastic member 31. The first connector 61 may include a first terminal-post welding portion 611, two first tab-welding-portions 612, a first inner welding ring 613, a first middle welding ring 614, a first outer welding ring 615, and a first array indentation 616.

The first terminal-post welding portion 611 is used for achieving the electrical connection between the first connector 61 and the first terminal post 41. In a possible embodiment, in the length direction of the end cover assembly 100, a width *W*1 of the first terminal-post welding portion 611 satisfies: 24mm ≤ *W*1 ≤ 38mm. It may be understood that, the first connector 61 is a metal component with greater mechanical strength. By setting the width *W*1 of the first terminal-post welding portion 611 within the aforementioned range, the strength of connection between the first connector 61 and the first terminal post 41 may be ensured, enabling the first connector 61 to be tightly welded to the first terminal post 41. In this way, the first lower plastic member 31 tightly abuts against the lower surface of the end cover 20, thereby enhancing the overall structural strength of the end cover assembly 100.

The two first tab-welding-portions 612 are connected to the same side of the first terminal-post welding portion 611. The two first tab-welding-portions 612 are spaced apart from each other in the width direction of the end cover assembly 100, so that the first connector 61 is C-shaped. Each first tab-welding-portion 612 is configured to be connected to the first tab 2230 of a corresponding electrode core 2210.

In a possible embodiment, in the width direction of the end cover assembly 100, a width *W2* of each of the two first tab-welding-portions 612 satisfies: 14mm ≤ *W2* ≤ 27mm. It may be understood that, by providing the two first tab-welding-portions 612 on the first connector 61 and positioning the two first tab-welding-portions 612 away from the first terminal post 41, portions of the first lower plastic member 31 corresponding to the two first tab-welding-portions 612 may tightly abut against the end cover 20 during welding the two first tab-welding-portions 612 to the two first tabs 2230. In this way, the performance of connection between the end cover 20 and the portions of the first lower plastic member 31 away from the first terminal post 41 may be enhanced, to prevent the central portion of the first lower plastic member 31 from being unsupported, thereby avoiding sagging of the first lower plastic member 31 caused by plastic degradation and strength reduction after prolonged use. It also prevents the opening below the explosion-proof valve 11 from enlarging due to the sagging of the first lower plastic member 31, which could otherwise allow foreign matter to easily enter and adhere to the explosion-proof valve 11, adversely affecting the valve-opening performance of the explosion-proof valve 11.

As illustrated in FIG. 13, the two first tab-welding-portions 612 and the first terminal-post welding portion 611 cooperatively define an opening 617, and a portion of the flow-splitting portion 313 is located in the opening 617. It may be understood that, by positioning a portion of the flow-splitting portion 313 located in the opening 617 cooperatively defined by the two first tab-welding-portions 612 and the first terminal-post welding portion 611, it can prevent the first connector 61 from occupying the space required by the flow-splitting portion 313, thereby ensuring that the function of the flow-splitting portion 313 in directing liquid remains unimpeded.

In a possible embodiment, in a length direction of the end cover assembly, a distance W3 between the first terminal-post welding portion 611 and the flow-splitting portion 313 satisfies: 0.5mm ≤ *W*3 ≤ 2.5mm. It may be understood that, an appropriate distance between the first terminal-post welding portion 611 and the flow-splitting portion 313 can be maintained by setting the distance between the first terminal-post welding portion 611 and the flow-splitting portion 313 within the aforementioned range, thereby ensuring that the flow-splitting portion 313 possesses a sufficient structural strength. Consequently, when electrolyte is injected into the flow-splitting portion 313 at high speed through a liquid injection hole 23, the flow-splitting portion 313 is less likely to bend downward or tilt under the impact of intense liquid flow, preventing a large amount of electrolyte spraying out from the side of the explosion-proof valve 11, and thus avoiding adversely affecting the uniformity of electrolyte distribution.

Reference is made to FIG. 11 and FIG. 12. The first array indentation 616 is disposed on the surface of the first terminal-post welding portion 611 facing away from the first lower plastic member 31. For example, the first array indentation 616 may include multiple dot-shaped indentations arranged in an array, and each two adjacent dot-shaped indentations are spaced apart from each other.

The first inner welding ring 613, the first middle welding ring 614, and the first outer welding ring 615 are all disposed on the first terminal-post welding portion 611. The first inner welding ring 613, the first middle welding ring 614, and the first outer welding ring 615 are all in contact with the first flange portion 412 of the first terminal post 41. The first flange portion 412 is fixedly connected to the first connector 61 by the first inner welding ring 613, the first middle welding ring 614, and the first outer welding ring 615. The centerline of the first inner welding ring 613, the centerline of the first middle welding ring 614, and the centerline of the first outer welding ring 615 coincide with one another. The first middle welding ring 614 is located outside and spaced apart from the first inner welding ring 613. The first outer welding ring 615 is located outside and spaced apart from the first middle welding ring 614. The first terminal-post welding portion 611 is electrically connected to the first terminal post 41 via the first inner welding ring 613, the first middle welding ring 614, and the first outer welding ring 615.

In a direction from the center to the edge of the first terminal-post welding portion 611, the radial dimension of the first inner welding ring 613, the radial dimension of the first middle welding ring 614, and the radial dimension of the first outer welding ring 615 increase sequentially. Consequently, the first inner welding ring 613, the first middle welding ring 614, and the first outer welding ring 615 form a concentrically nested structure.

For example, the first inner welding ring 613, the first middle welding ring 614, and the first outer welding ring 615 may be formed by performing laser penetration welding on the first connector 61 and the first terminal post 41. In the thickness direction of the end cover assembly 100, the first inner welding ring 613 may protrude relative to the two opposite surfaces of the first terminal-post welding portion 611, or may be recessed relative to the two opposite surfaces of the first terminal-post welding portion 611, or may have an uneven and undulating morphology on either or both of the two opposite surfaces of the first terminal-post welding portion 611, and so on. In the thickness direction of the end cover assembly 100, the first middle welding ring 614 may protrude relative to the two opposite surfaces of the first terminal-post welding portion 611, or may be recessed relative to the two opposite surfaces of the first terminal-post welding portion 611, or may have an uneven and undulating morphology on either or both of the two opposite surfaces of the first terminal-post welding portion 611. In the thickness direction of the end cover assembly 100, the first outer welding ring 615 may protrude relative to the two opposite surfaces of the first terminal-post welding portion 611, or may be recessed relative to the two opposite surfaces of the first terminal-post welding portion 611, or have an uneven and undulating morphology on either or both of the two opposite surfaces of the first terminal-post welding portion 611. The shapes of the first inner welding ring 613, the first middle welding ring 614, and the first outer welding ring 615 may be approximately regular shapes, such as circular shape, equilateral triangular shape, rectangular shape, polygonal shape, etc. In the accompanying drawings, the first inner welding ring 613, the first middle welding ring 614, and the first outer welding ring 615 are illustrated as circular shapes, where the centerline corresponds to the center of the circle.

In embodiments of the disclosure, the first inner welding ring 613, the first middle welding ring 614, and the first outer welding ring 615 are all located within a region enclosed by the first array indentation 616 on the first terminal-post welding portion 611. On one hand, the first array indentation 616 can serve a positioning function, enabling rapid alignment between the first terminal-post welding portion 611 and the first terminal post 41 during the welding of the first connector 61 to the first terminal post 41, which is beneficial for improving the efficiency of welding the first connector 61 to the first terminal post 41. On the other hand, the first array indentation 616 can increase the surface roughness of the first terminal-post welding portion 611. This helps prevent damage to the welding laser head caused by specular reflection of the laser beam off the smooth surface of the first terminal-post welding portion 611 during laser penetration welding between the first terminal post 41 and the first connector 61. Instead, the laser beam undergoes diffuse reflection on the surface of the first terminal-post welding portion 611, allowing for rapid absorption of laser energy by the first terminal-post welding portion 611, thereby further enhancing the efficiency of welding the first connector 61 to the first terminal post 41.

In a possible embodiment, a distance between an outer edge of the first outer welding ring 615 and an outer edge of the first array indentation 616 is greater than or equal to 2mm. In this way, a sufficient welding between the first connector 61 and the first terminal post 41 may be ensured, further improving the performance of connection between the first connector 61 and the first terminal post 41. Exemplarily, in the length direction and the width direction of the end cover assembly 100, the distance between the outer edge of the first outer welding ring 615 and the outer edge of the first array indentation 616 is greater than or equal to 2mm.

In a possible embodiment, a region enclosed by the first array indentation 616 on the first terminal-post welding portion 611 is larger than an orthographic projection of the first flange portion 412 on the first terminal-post welding portion 611. In this way, the first array indentation 616 can serve a positioning function, enabling rapid alignment between the first terminal-post welding portion 611 of the first connector 61 and the first flange portion 412 of the first terminal post 41 during the welding of the first connector 61 to the first terminal post 41, which is beneficial for improving the efficiency of welding the first connector 61 to the first terminal post 41 and ensuring reliable welding between the first connector 61 and the first flange portion 412 of the first terminal post 41.

In embodiments of the disclosure, both an orthographic projection of the first inner welding ring 613 on the first terminal-post welding portion 611 and an orthographic projection of the first middle welding ring 614 on the first terminal-post welding portion 611 are covered by an orthographic projection of the first post body 411 on the first terminal-post welding portion 611. In other words, an orthographic projection of the first post body 411 on the first terminal-post welding portion 611 covers both an orthographic projection of the first inner welding ring 613 on the first terminal-post welding portion 611 and an orthographic projection of the first middle welding ring 614 on the first terminal-post welding portion 611. It may be understood that, the first inner welding ring 613 and the first middle welding ring 614 primarily serve as the current path region between the first terminal post 41 and the first connector 61. By having the orthographic projection of the first post body 411 on the first terminal-post welding portion 611 cover both the orthographic projection of the first inner welding ring 613 on the first terminal-post welding portion 611 and the orthographic projection of the first middle welding ring 614 on the first terminal-post welding portion 611, the first connector 61 can be welded to the first flange portion 412 of the first terminal post 41 solely by the first inner welding ring 613 and the first middle welding ring 614, achieving electrical connection between the first connector 61 and the first terminal post 41. In this way, a large-area and stable electrical connection between the first connector 61 and the first post body 411 may be formed, thereby enhancing the overcurrent capability between the first connector 61 and the first post body 411.

Moreover, an area enclosed by the first outer welding ring 615 on the first terminal-post welding portion 611 is larger than an area of an orthographic projection of the first post body 411 on the first terminal-post welding portion 611. In this way, the first outer welding ring 615 can establish the connection between the first connector 61 and the first terminal post 41, and enables the first connector 61 to further press tightly against the first lower plastic member 31, ensuring a tight abutment between the first lower plastic member 31 and the end cover 20, thereby increasing the connection reliability among various components in the end cover assembly 100. Additionally, it can avoid an issue where heat concentrates in the region around the post body of the first terminal post 41 during welding of the first connector 61 and the first terminal post 41. Such concentrated heat may soften a first upper plastic member 51, causing the first terminal post 41 to sag towards the side of the jelly roll 2220.

Reference is again made to FIG. 12 and FIG. 13. A distance D1 between the first inner welding ring 613 and the first middle welding ring 614 is less than a distance D2 between the first middle welding ring 614 and the first outer welding ring 615. It may be understood that, the first inner welding ring 613 and the first middle welding ring 614 primarily serve as the current path region between the first terminal post 41 and the first connector 61. By setting a relatively small distance between the first inner welding ring 613 and the first middle welding ring 614, a surface connection structure is easily formed, avoiding the formation of parasitic capacitance between the first inner welding ring 613 and the first middle welding ring 614, thereby reducing potential current loss. The first outer welding ring 615 primarily serves as a reinforcement ring for the connection between the first terminal post 41 and the first connector 61. The first outer welding ring 615 having a larger diameter can increase the welding area between the first connector 61 and the first terminal post 41, further enhancing the structural strength of the end cover assembly 100. Through the coordinated arrangement of the first inner welding ring 613, the first middle welding ring 614, and the first outer welding ring 615, a large-area and stable connection structure may be formed between the first connector 61 and the first terminal post 41.

In the embodiments of the disclosure, the first inner welding ring 613 has a first welding stress point 6131, the first middle welding ring 614 has a second welding stress point 6141, and the first outer welding ring 615 has a third welding stress point 6151. In the radial direction of the first outer welding ring 615, any two of the first welding stress point 6131, the second welding stress point 6141, and the third welding stress point 6151 are arranged in a staggered manner.

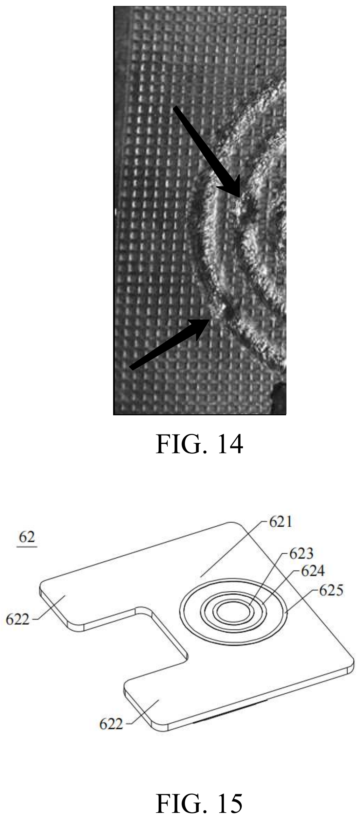

Reference is made to FIG. 14, which is a schematic structural view illustrating welding stress points on the first connector 61 or the second connector 62 of the end cover assembly 100 illustrated in FIG. 6. In FIG. 14, the arrows indicate the schematic structure of the welding stress points. Each welding stress point (the first welding stress point 6131, the second welding stress point 6141, the third welding stress point 6151) corresponds to a region on the welded material that experiences a significant temperature gradient during the continuous welding process of the laser welding head. Specifically, each welding stress point corresponds to a start position and/or an end position of the trace of a welding ring. At the beginning of welding, the material does not heat sufficiently for complete welding, resulting in stress generated inside the start position. To ensure uniform welding, the end position slightly overlaps the start position; since residual heat from the preceding welding remains, local temperature at the end position is relatively high, leading to greater internal stress after cooling. In order to improve welding efficiency, a start position and an end position of a welding ring typically coincide. The welding stress point appears as a small groove on the trace of a welding ring, distinctly different from the regular fish-scale pattern on two sides of the welding stress point, and is observable with the naked eye. The first welding stress point 6131 may indicate a start position (or end position) for welding the first inner welding ring 613. The second welding stress point 6141 may indicate a start position (or end position) for welding the first middle welding ring 614. The third welding stress point 6151 may indicate a start position (or end position) for welding the first outer welding ring 615.

It may be understood that, the first welding stress point 6131 may indicate a welding start point (or end point) of the first inner welding ring 613, and the first welding stress point 6131 may be a pit formed by the melting of the first connector 61 under heat. The second welding stress point 6141 may indicate a welding start point (or end point) of the first middle welding ring 614, and the second welding stress point 6141 may be a pit formed by the melting of the first connector 61 under heat. The third welding stress point 6151 may indicate a welding start point (or end point) of the first outer welding ring 615, and the third welding stress point 6151 may be a pit formed by the melting of the first connector 61 under heat. By staggering the welding start points (end points) of the three welding rings in the radial direction of the welding rings, concentration of the welding start points (end points) in the same radius direction is avoided, which prevents insufficient structural strength of the first connector 61 caused by melting of the first connector 61. Furthermore, it effectively mitigates warping of the first connector 61 due to stress concentration. As a result, the performance of electrical connection between the first terminal post 41 and the electrode assembly 220 is improved, contributing to enhanced service life and operational reliability of the energy-storage apparatus 200 equipped with the end cover assembly 100.

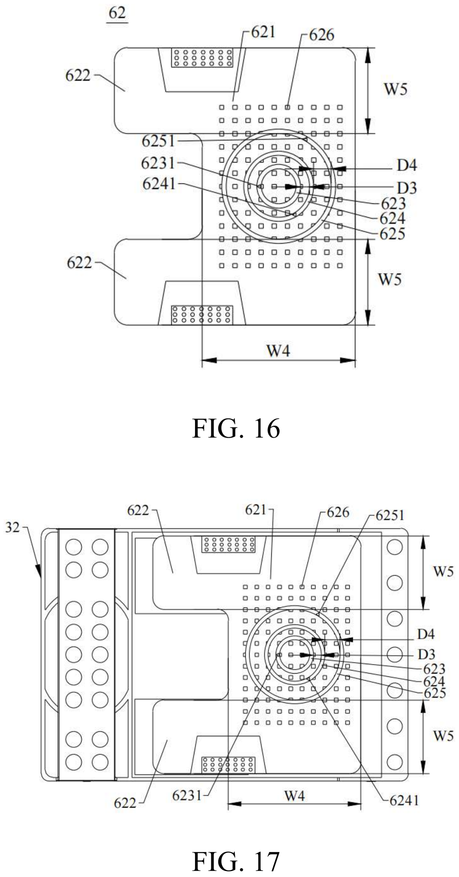

Reference is made to FIG. 7, FIG. 15, FIG. 16, and FIG. 17. FIG. 15 is a schematic structural view of the second connector 62 of the connector assembly 60 illustrated in FIG. 7, viewed from one direction. FIG. 16 is a schematic structural view of the second connector 62 of the connector assembly 60 illustrated in FIG. 7, viewed from another direction. FIG. 17 is a schematic structural view illustrating assembly of the second connector 62 and the second lower plastic member 32 illustrated in FIG. 7, viewed from one direction.

The second connector 62 abuts against the third surface 3211 of the second lower plastic member 32. The second connector 62 may include a second terminal-post welding portion 621, two second tab-welding-portions 622, a second inner welding ring 623, a second middle welding ring 624, a second outer welding ring 625, and a second array indentation 626.

The second terminal-post welding portion 621 is used for achieving the electrical connection between the second connector 62 and the second terminal post 42. In a possible embodiment, in the length direction of the end cover assembly 100, a width *W*4 of the second terminal-post welding portion 621 satisfies: 24mm ≤ *W*4 ≤ 38mm. It may be understood that, the second connector 62 is a metal component with greater mechanical strength. By setting the width W4 of the second terminal-post welding portion 621 within the aforementioned range, the strength of connection between the second connector 62 and the second terminal post 42 may be ensured, enabling the second connector 62 to be tightly welded to the second terminal post 42. In this way, the second lower plastic member 32 tightly abuts against the lower surface of the end cover 20, thereby enhancing the overall structural strength of the end cover assembly 100.

The two second tab-welding-portions 622 are connected to the same side of the second terminal-post welding portion 621. The two second tab-welding-portions 622 are spaced apart from each other in the width direction of the end cover assembly 100, so that the second connector 62 is C-shaped. Each second tab-welding-portion 622 is configured to be connected to the second tab 2240 of a corresponding electrode core 2210.

In a possible embodiment, in the width direction of the end cover assembly 100, a width *W*5 of each of the two second tab-welding-portions 622 satisfies: 14mm ≤ *W*2 ≤ 27mm. It may be understood that, by providing the two second tab-welding-portions 622 on the second connector 62 and positioning the two second tab-welding-portions 622 away from the second terminal post 42, portions of the second lower plastic member 32 corresponding to the two second tab-welding-portions 622 may tightly abut against the end cover 20 during welding the two second tab-welding-portions 622 to the two second tabs 2240. In this way, the performance of connection between the end cover 20 and the portions of the second lower plastic member 32 away from the second terminal post 42 may be enhanced, to prevent the central portion of the second lower plastic member 32 from being unsupported, thereby avoiding sagging of the second lower plastic member 32 caused by plastic degradation and strength reduction after prolonged use. It also prevents the opening below the explosion-proof valve 11 from enlarging due to the sagging of the second lower plastic member 32. A larger opening makes it easier for foreign matter to enter and adhere to the explosion-proof valve 11, affecting the valve-opening performance of the explosion-proof valve 11.

Reference is made to FIG. 15 and FIG. 16. The second array indentation 626 is disposed on the surface of the second terminal-post welding portion 621 facing away from the second lower plastic member 32. For example, the second array indentation 626 may include multiple dot-shaped indentations arranged in an array, and each two adjacent dot-shaped indentations are spaced apart from each other.

The second inner welding ring 623, the second middle welding ring 624, and the second outer welding ring 625 are all disposed on the second terminal-post welding portion 621. The second inner welding ring 623, the second middle welding ring 624, and the second outer welding ring 625 are all in contact with the second flange portion 422 of the second terminal post 42. The second flange portion 422 is fixedly connected to the second connector 62 by the second inner welding ring 623, the second middle welding ring 624, and the second outer welding ring 625. The centerline of the second inner welding ring 623, the centerline of the second middle welding ring 624, and the centerline of the second outer welding ring 625 coincide with one another. The second middle welding ring 624 is located outside and spaced apart from the second inner welding ring 623. The second outer welding ring 625 is located outside and spaced apart from the second middle welding ring 624. The second terminal-post welding portion 621 is electrically connected to the second terminal post 42 via the second inner welding ring 623, the second middle welding ring 624, and the second outer welding ring 625.

In a direction from the center to the edge of the second terminal-post welding portion 621, the radial dimension of the second inner welding ring 623, the radial dimension of the second middle welding ring 624, and the radial dimension of the second outer welding ring 625 increase sequentially. Consequently, the second inner welding ring 623, the second middle welding ring 624, and the second outer welding ring 625 form a concentrically nested structure.

For example, the second inner welding ring 623, the second middle welding ring 624, and the second outer welding ring 625 may be formed by performing laser penetration welding on the second connector 62 and the second terminal post 42. In the thickness direction of the end cover assembly 100, the second inner welding ring 623 may protrude relative to the two opposite surfaces of the second terminal-post welding portion 621, or may be recessed relative to the two opposite surfaces of the second terminal-post welding portion 621, or may have an uneven and undulating morphology on either or both of the two opposite surfaces of the second terminal-post welding portion 621, and so on. In the thickness direction of the end cover assembly 100, the second middle welding ring 624 may protrude relative to the two opposite surfaces of the second terminal-post welding portion 621, or may be recessed relative to the two opposite surfaces of the second terminal-post welding portion 621, or may have an uneven and undulating morphology on either or both of the two opposite surfaces of the second terminal-post welding portion 621. In the thickness direction of the end cover assembly 100, the second outer welding ring 625 may protrude relative to the two opposite surfaces of the second terminal-post welding portion 621, or may be recessed relative to the two opposite surfaces of the second terminal-post welding portion 621, or have an uneven and undulating morphology on either or both of the two opposite surfaces of the second terminal-post welding portion 621. The shapes of the second inner welding ring 623, the second middle welding ring 624, and the second outer welding ring 625 may be approximately regular shapes, such as circular shape, equilateral triangular shape, rectangular shape, polygonal shape, etc. In the accompanying drawings, the second inner welding ring 623, the second middle welding ring 624, and the second outer welding ring 625 are illustrated as circular shapes, where the centerline corresponds to the center of the circle.

In embodiments of the disclosure, the second inner welding ring 623, the second middle welding ring 624, and the second outer welding ring 625 are all located within a region enclosed by the second array indentation 626 on the second terminal-post welding portion 621. On one hand, the second array indentation 626 can serve a positioning function, enabling rapid alignment between the second terminal-post welding portion 621 and the second terminal post 42 during the welding of the second connector 62 to the second terminal post 42, which is beneficial for improving the efficiency of welding the second connector 62 to the second terminal post 42. On the other hand, the second array indentation 626 can increase the surface roughness of the second terminal-post welding portion 621. This helps prevent damage to the welding laser head caused by specular reflection of the laser beam off the smooth surface of the second terminal-post welding portion 621 during laser penetration welding between the second terminal post 42 and the second connector 62. Instead, the laser beam undergoes diffuse reflection on the surface of the second terminal-post welding portion 621, allowing for rapid absorption of laser energy by the second terminal-post welding portion 621, thereby further enhancing the efficiency of welding the second connector 62 to the second terminal post 42.

In a possible embodiment, a distance between an outer edge of the second outer welding ring 625 and an outer edge of the second array indentation 626 is greater than or equal to 2mm. In this way, a sufficient welding between the second connector 62 and the second terminal post 42 may be ensured, further improving the performance of connection between the second connector 62 and the second terminal post 42. Exemplarily, in the length direction and the width direction of the end cover assembly 100, the distance between the outer edge of the second outer welding ring 625 and the outer edge of the second array indentation 626 is greater than or equal to 2mm.

In a possible embodiment, a region enclosed by the second array indentation 626 on the second terminal-post welding portion 621 is larger than an orthographic projection of the second flange portion 422 on the second terminal-post welding portion 621. In this way, the second array indentation 626 can serve a positioning function, enabling rapid alignment between the second terminal-post welding portion 621 of the second connector 62 and the second flange portion 422 of the second terminal post 42 during the welding of the second connector 62 to the second terminal post 42, which is beneficial for improving the efficiency of welding the second connector 62 to the second terminal post 42 and ensuring reliable welding between the second connector 62 and the second flange portion 422 of the second terminal post 42.

In embodiments of the disclosure, both an orthographic projection of the second inner welding ring 623 on the second terminal-post welding portion 621 and an orthographic projection of the second middle welding ring 624 on the second terminal-post welding portion 621 are covered by an orthographic projection of the second post body 421 on the second terminal-post welding portion 621. In other words, an orthographic projection of the second post body 421 on the second terminal-post welding portion 621 covers both an orthographic projection of the second inner welding ring 623 on the second terminal-post welding portion 621 and an orthographic projection of the second middle welding ring 624 on the second terminal-post welding portion 621. It may be understood that, the second inner welding ring 623 and the second middle welding ring 624 primarily serve as the current path region between the second terminal post 42 and the second connector 62. By having the orthographic projection of the second post body 421 on the second terminal-post welding portion 621 cover both the orthographic projection of the second inner welding ring 623 on the second terminal-post welding portion 621 and the orthographic projection of the second middle welding ring 624 on the second terminal-post welding portion 621, the second connector 62 can be welded to the second flange portion 422 of the second terminal post 42 solely by the second inner welding ring 623 and the second middle welding ring 624, achieving electrical connection between the second connector 62 and the second terminal post 42. In this way, a large-area and stable electrical connection between the second connector 62 and the second terminal post 42 may be formed, thereby enhancing the overcurrent capability between the second connector 62 and the second terminal post 42.

Moreover, an area enclosed by the second outer welding ring 625 on the second terminal-post welding portion 621 is larger than an area of an orthographic projection of the second post body 421 on the second terminal-post welding portion 621. In this way, the second outer welding ring 625 can establish the connection between the second connector 62 and the second terminal post 42, and enables the second connector 62 to further press tightly against the second lower plastic member 32, ensuring a tight abutment between the second lower plastic member 32 and the end cover 20, thereby increasing the connection reliability among various components in the end cover assembly 100. Additionally, it can avoid an issue where heat concentrates in the region around the post body of the second terminal post 42 during welding of the second connector 62 and the second terminal post 42. Such concentrated heat may soften a second upper plastic member 52, causing the second terminal post 42 to sag towards the side of the jelly roll 2220.

Reference is again made to FIG. 16 and FIG. 17. A distance D3 between the second inner welding ring 623 and the second middle welding ring 624 is less than a distance D4 between the second middle welding ring 624 and the second outer welding ring 625. It may be understood that, the second inner welding ring 623 and the second middle welding ring 624 primarily serve as the current path region between the second terminal post 42 and the second connector 62. By setting a relatively small distance between the second inner welding ring 623 and the second middle welding ring 624, a surface connection structure is easily formed, avoiding the formation of parasitic capacitance between the second inner welding ring 623 and the second middle welding ring 624, thereby reducing potential current loss. The second outer welding ring 625 primarily serves as a reinforcement ring for the connection between the second terminal post 42 and the second connector 62. The second outer welding ring 625 having a larger diameter can increase the welding area between the second connector 62 and the second terminal post 42, further enhancing the structural strength of the end cover assembly 100. Through the coordinated arrangement of the second inner welding ring 623, the second middle welding ring 624, and the second outer welding ring 625, a large-area and stable connection structure may be formed between the second connector 62 and the second terminal post 42.

In the embodiments of the disclosure, the second inner welding ring 623 has a fourth welding stress point 6231, the second middle welding ring 624 has a fifth welding stress point 6241, and the second outer welding ring 625 has a sixth welding stress point 6251. In the radial direction of the second outer welding ring 625, any two of the fourth welding stress point 6231, the fifth welding stress point 6241, and the sixth welding stress point 6251 are arranged in a staggered manner.

Reference is made to FIG. 14. In FIG. 14, the arrows indicate the schematic structure of the welding stress points. Each welding stress point (the fourth welding stress point 6231, the fifth welding stress point 6241, the sixth welding stress point 6251) corresponds to a region on the welded material that experiences a significant temperature gradient during the continuous welding process of the laser welding head. Specifically, each welding stress point corresponds to a start position and/or an end position of the trace of a welding ring. At the beginning of welding, the material does not heat sufficiently for complete welding, resulting in stress generated inside the start position. To ensure uniform welding, the end position slightly overlaps the start position; since residual heat from the preceding welding remains, local temperature at the end position is relatively high, leading to greater internal stress after cooling. In order to improve welding efficiency, a start position and an end position of a welding ring typically coincide. The welding stress point appears as a small groove on the trace of a welding ring, distinctly different from the regular fish-scale pattern on two sides of the welding stress point, and is observable with the naked eye. The fourth welding stress point 6231 may indicate a start position (or end position) for welding the second inner welding ring 623. The fifth welding stress point 6241 may indicate a start position (or end position) for welding the second middle welding ring 624. The sixth welding stress point 6251 may indicate a start position (or end position) for welding the second outer welding ring 625.

It may be understood that, the fourth welding stress point 6231 may indicate a welding start point (or end point) of the second inner welding ring 623, and the fourth welding stress point 6231 may be a pit formed by the melting of the second connector 62 under heat. The fifth welding stress point 6241 may indicate a welding start point (or end point) of the second middle welding ring 624, and the fifth welding stress point 6241 may be a pit formed by the melting of the second connector 62 under heat. The sixth welding stress point 6251 may indicate a welding start point (or end point) of the second outer welding ring 625, and the sixth welding stress point 6251 may be a pit formed by the melting of the second connector 62 under heat. By staggering the welding start points (end points) of the three welding rings in the radial direction of the welding rings, concentration of the welding start points (end points) in the same radius direction is avoided, which prevents insufficient structural strength of the second connector 62 caused by melting of the second connector 62. Furthermore, it effectively mitigates warping of the second connector 62 due to stress concentration. As a result, the performance of electrical connection between the second terminal post 42 and the electrode assembly 220 is improved, contributing to enhanced service life and operational reliability of the energy-storage apparatus 200 equipped with the end cover assembly 100.

Reference is again made to FIG. 7. The insulating film assembly 70 may include one first insulating film 71, one second insulating film 72, two third insulating films 73, two fourth insulating films 74, two fifth insulating films 75, and two sixth insulating films 76. The first insulating film 71 is located between the first terminal-post welding portion 611 and the electrode assembly 220. The second insulating film 72 is located between the second terminal-post welding portion 621 and the electrode assembly 220. Each third insulating film 73 is located between a corresponding first tab-welding-portion 612 and the electrode assembly 220. Each fourth insulating film 74 is located between a corresponding first tab-welding-portion 612 and the first lower plastic member 31. Each fifth insulating film 75 is located between a corresponding second tab-welding-portion 622 and the electrode assembly 220. Each sixth insulating film 76 is located between a corresponding second tab-welding-portion 622 and the second lower plastic member 32. For example, the first insulating film 71 and the second insulating film 72 may be green films, and the third insulating film 73, the fourth insulating film 74, the fifth insulating film 75, and the sixth insulating film 76 may be green films.

It may be understood that, insulating films (the third insulating film 73 and the fourth insulating film 74) are disposed on two opposite sides of the first tab-welding-portion 612. On one hand, this design may prevent the first lower plastic member 31 from being scratched by burrs on the side of the first tab-welding-portion 612 facing away from the electrode assembly 220 after welding. On the other hand, a side of the first tab-welding-portion 612 close to the electrode assembly 220 can be prevented from being scratched, thereby avoiding generation of metal debris, and thus avoiding a case that metal debris falls into the electrode assembly 220 and causes a short circuit. Similarly, insulating films (the fifth insulating film 75 and the sixth insulating film 76) are disposed on two opposite sides of the second tab-welding-portion 622. On one hand, this design may prevent the second lower plastic member 32 from being scratched by burrs on the side of the second tab-welding-portion 622 facing away from the electrode assembly 220 after welding. On the other hand, a side of the second tab-welding-portion 622 close to the electrode assembly 220 can be prevented from being scratched, thereby avoiding generation of metal debris, and thus avoiding a case that metal debris falls into the electrode assembly 220 and causes a short circuit. Furthermore, since the fourth insulating film 74 and the sixth insulating film 76 have an appreciable thickness, the pressure applied by the end of the connector away from the terminal post onto the lower plastic member may be further enhanced by interposing the fourth insulating film 74 and the sixth insulating film 76 between the connector (the first connector 61 or the second connector 62) and the lower plastic member (the first lower plastic member 31 or the second lower plastic member 32), thereby further improving the conformity between the lower plastic member and the end cover 20.

By disposing the first insulating film 71 on a side of the first terminal-post welding portion 611 facing the electrode assembly 220, a side of the first terminal-post welding portion 611 close to the electrode assembly 220 can be prevented from being scratched, thereby avoiding generation of metal debris, and thus avoiding a case that metal debris falls into the electrode assembly 220 and causes a short circuit. By disposing the second insulating film 72 on a side of the first terminal-post welding portion 621 facing the electrode assembly 220, a side of the second terminal-post welding portion 621 close to the electrode assembly 220 can be prevented from being scratched, thereby avoiding generation of metal debris, and thus avoiding a case that metal debris falls into the electrode assembly 220 and causes a short circuit.

Unless otherwise defined, all technical and scientific terms used herein have the same meaning as commonly understood by those skilled in the art of the disclosure. The terms used herein are for the purpose of describing embodiments only and are not intended to limit the disclosure. The terms of "include" and "have" and any variations thereof in the specification and the claims of the disclosure and in the accompanying drawings are intended to cover the non-exclusive inclusion.

In the elaboration of embodiments of the disclosure, the technical terms such as "first" and "second" are merely intended to distinguish between different objects but not intended to indicate or imply relative importance or implicitly specify the number of the indicated technical features, specific order, or order of precedence. In the elaboration of embodiments of the disclosure, unless otherwise expressly specified, "multiple" means two or more.

The terms of "embodiment" mentioned herein means that the specific features, structures, or characteristics described with reference to the embodiments may be encompassed in at least one embodiment of the disclosure. The phrase at various locations in the specification does not necessarily refer to the same embodiment, or an independent or alternative embodiment exclusive of another embodiment. Those skilled in the art may understand explicitly and implicitly that the embodiments described herein may be combined with other embodiments.

In the elaboration of embodiments of the disclosure, the term "and/or" only describes an association relationship between associated objects, which means that there can be three relationships. For example, A and/or B can mean A alone, both A and B exist, and B alone. In addition, the character "/" herein generally indicates that associated objects are in an "or" relationship.

In the elaboration of embodiments of the disclosure, the orientation or position relationships indicated by the technical terms such as "central", "longitudinal", "transverse", "length", "width", "thickness", "upper", "lower", "front"; "rear", "left", "right", "vertical", "horizontal", "top", "bottom", "inner", "outer", "clockwise", "counter-clockwise", "axial", "radial", "circumferential", etc., are orientation or position relationships based on the accompanying drawings, only for facilitating description of embodiments of the disclosure and simplifying the description, rather than indicating or implying that the referred devices or elements must be in a particular orientation or constructed or operated in the particular orientation, and therefore they may not be construed as limiting the disclosure.

In the elaboration of embodiments of the disclosure, unless otherwise explicitly specified and defined, the technical terms such as "mounting", "mutual connection", "connection", "fixing", etc., may be understood in a broad sense, for example, they may be a fixed connection, a detachable connection, or an integrated connection; may be a mechanical connection or an electrical connection; and may be a direct connection or an indirect connection through an intermediate medium, and may be communication between interiors of two elements or interaction between the two elements. For those of ordinary skill in the art, the specific meaning of the above terms in the embodiments of the disclosure can be understood according to specific situations.

Finally, it may be noted that, the foregoing embodiments are merely intended to illustrate rather than limit the technical solutions of the disclosure. Although the disclosure is described in detail with reference to the foregoing optimal embodiments, it will be understood by those of ordinary skill in the art that modifications or equivalent replacements can be made to the technical solutions of the disclosure without departing from the spirit and scope of the technical solutions of the disclosure.

## Claims

1. An end cover assembly, comprising:
a first lower plastic member having a first surface facing an electrode assembly;
a first terminal post penetrating through the first lower plastic member; and
a first connector, wherein the first connector abuts against the first surface, the first connector is electrically connectable between the first terminal post and the electrode assembly, the first connector comprises a first terminal-post welding portion, and comprises a first inner welding ring, a first middle welding ring, and a first outer welding ring disposed on the first terminal-post welding portion;
wherein a centerline of the first inner welding ring, a centerline of the first middle welding ring, and a centerline of the first outer welding ring coincide with one another, the first middle welding ring is located outside the first inner welding ring and spaced apart from the first inner welding ring, the first outer welding ring is located outside the first middle welding ring and spaced apart from the first middle welding ring, and the first terminal-post welding portion is electrically connected to the first terminal post via the first inner welding ring, the first middle welding ring, and the first outer welding ring; and
wherein the first inner welding ring has a first welding stress point, the first middle welding ring has a second welding stress point, and the first outer welding ring has a third welding stress point; in a radial direction of the first outer welding ring, any two stress points of the first welding stress point, the second welding stress point, and the third welding stress point are arranged in a staggered manner.

2. The end cover assembly according to claim 1, wherein a distance between the first inner welding ring and the first middle welding ring is less than a distance between the first middle welding ring and the first outer welding ring.

3. The end cover assembly according to claim 1 or 2, wherein the first terminal post comprises a first post body and a first flange portion, wherein the first post body protrudes from the first flange portion, a first terminal-post through hole is defined on the first lower plastic member, wherein the first terminal-post through hole comprises a first hole and a second hole communicating with each other, an aperture size of the second hole is greater than an aperture size of the first hole, a portion of the first post body is located in the first hole, the first flange portion is located in the second hole, a surface of the first flange portion facing away from the first post body is flush with the first surface, and the first flange portion is fixedly connected to the first connector by the first inner welding ring, the first middle welding ring, and the first outer welding ring.

4. The end cover assembly according to claim 3, wherein an area enclosed by the first outer welding ring on the first terminal-post welding portion is larger than an area of an orthographic projection of the first post body on the first terminal-post welding portion.

5. The end cover assembly according to claim 3, wherein an orthographic projection of the first post body on the first terminal-post welding portion covers both an orthographic projection of the first inner welding ring on the first terminal-post welding portion and an orthographic projection of the first middle welding ring on the first terminal-post welding portion.

6. The end cover assembly according to claim 3, wherein the first connector further comprises a first array indentation disposed on a surface of the first terminal-post welding portion facing away from the first lower plastic member, wherein the first inner welding ring, the first middle welding ring, and the first outer welding ring are all located within a region enclosed by the first array indentation on the first terminal-post welding portion.

7. The end cover assembly according to claim 6, wherein a distance between an outer edge of the first outer welding ring and an outer edge of the first array indentation is greater than or equal to 2mm.

8. The end cover assembly according to claim 6, wherein a region enclosed by the first array indentation on the first terminal-post welding portion is larger than an orthographic projection of the first flange portion on the first terminal-post welding portion.

9. The end cover assembly according to claim 1 or 2, wherein the first connector further comprises two first tab-welding-portions, wherein the two first tab-welding-portions are connected to a same side of the first terminal-post welding portion, and are spaced apart from each other in a width direction of the end cover assembly; and
the first terminal-post welding portion and the two first tab-welding-portions cooperatively define an opening, the first lower plastic member comprises a first lower plastic body and a flow-splitting portion, wherein the flow-splitting portion protrudes from the first surface of the first lower plastic body, and a portion of the flow-splitting portion is located in the opening.

10. The end cover assembly according to claim 9, wherein the first lower plastic member further comprises a first barrier wall, wherein the first barrier wall is annularly disposed on a periphery of the first lower plastic body in a circumferential direction of the first lower plastic body, the first barrier wall protrudes from the first surface of the first lower plastic body, the first barrier wall and the first lower plastic body cooperatively define a first cavity, and the first cavity is configured to accommodate a portion of the first connector.

11. The end cover assembly according to claim 1 or 2, wherein in a length direction of the end cover assembly, a width *W*1 of the first terminal-post welding portion satisfies: 24mm ≤ *W*1 ≤ 38mm.

12. The end cover assembly according to claim 9, wherein in the width direction of the end cover assembly, a width *W2* of each of the two first tab-welding-portions satisfies: 14mm ≤ *W*2 ≤ 27mm.

13. The end cover assembly according to claim 9, wherein in a length direction of the end cover assembly, a distance *W*3 between the first terminal-post welding portion and the flow-splitting portion satisfies: 0.5mm ≤ *W*3 ≤ 2.5mm.

14. An energy-storage apparatus, comprising an electrode assembly and the end cover assembly according to any one of claims 1 to 13, wherein the electrode assembly is electrically connected to the end cover assembly.

15. An energy-storage system, comprising the energy-storage apparatus according to claim 14.
